# EUROPÄISCHE PATENTSCHRIFT

(11) **EP 0 859 171 B1**
(45) Veröffentlichungstag und Bekanntmachung des Hinweises auf die Patenterteilung: **05.06.2002**
(21) Anmeldenummer: 98102259.3
(22) Anmeldetag: 10.02.1998
(51) Int. Cl.: F16H 61/06, B60K 41/22

(54) **Eichverfahren für Steuerkupplungen eines Getriebes**
Method for calibrating shifting clutches in a transmission
Méthode de calibration des embrayages d'une transmission

(30) Priorität: 18.02.1997 US 800431
(43) Veröffentlichungstag der Anmeldung: 19.08.1998
(73) Patentinhaber: DEERE & COMPANY, Moline, Illinois 61265-8098 (US)
(72) Erfinder: Reeves, William Edward, Coffeyville, KS 67337 (US); Vaughters, Kevin Lee, Altamont, KS 67330 (US); Detrick, George William, II, Coffeyville, KS 67337 (US); Gruver, Norval Thomas, Independence, KS 67301 (US); Eastman, Briton Todd, Coffeyville, KS 67337 (US)
(74) Vertreter: Magin, Ludwig Bernhard

(56) Entgegenhaltungen:
- EP-A- 0 435 374
- US-A- 4 989 471
- US-A- 5 224 577
- US-A- 5 456 647

## Beschreibung

Die Erfindung betrifft ein Verfahren zum Eichen einer Steuerkupplung eines Getriebes, wobei das Getriebe eine mit einem Motor verbundene Eingangswelle, eine Ausgangswelle und mehrere Steuerkupplungen aufweist, die jede ein Drehmomente empfangendes Eingangselement und ein Ausgangselement aufweisen. Durch das Eichverfahren sollen Schlüsselparameter, die sich auf den Betrieb und die Steuerung der Steuerkupplungen beziehen, bestimmt werden.

Es wurden bereits elektrohydraulische Getriebesteuerungen angewendet, die proportional angesteuerte Ventile enthalten. In derartigen Systemen mit proportional gesteuerten Ventilen ist es möglich und wünschenswert, das Drehmoment der Kupplungen während deren Eingriffsphase genau zu steuern. Während die elektrischen Steuersignale, die an die Steuerventile angelegt werden, sehr genau einstellbar sind, verursachen die Fertigungstoleranzen der Ventile und des Getriebes erhebliche Abweichungen zwischen verschiedenen konkreten Fahrzeugen. Wenn es bekannt wäre, welches elektrische Steuersignal mit einem anfänglichen Kupplungseingriffsdruck, bei dem die Kupplung gerade beginnt, ein Drehmoment zu übertragen, korrespondiert, dann könnte dieses Steuersignal verwendet werden, um während einer Getriebeumschaltung die Umschaltanforderung für die Kupplung derart zu modifizieren, daß sich eine optimierte Steuerung ergibt.

Beispielsweise offenbart die US-A-4,855,913, daß die Schlüsselparameter des Steuersystems den anfänglichen Kupplungseingriffsdruck (bezeichnet mit DC-MAX) und die Schnellfüllkupplungsverzögerung (bezeichnet als T1) einschließen. Es wird desweiteren dargelegt, daß DC-MAX und T1 durch Labor- oder Feldtests bestimmt werden müssen. Ein konkretes Verfahren zur Bestimmung dieser Werte wird jedoch nicht angegeben.

Die US-A-4,989,471 beschreibt für eine Getriebesteueranordnung auf Mikroprozessorbasis ein Eichverfahren oder eine Methode zur Ermittlung des Drucks, der erforderlich ist, um einen Kupplungseingriff zu erzielen. Bei dem Verfahren wird die Getriebeausgangswelle abgebremst, dann der Kupplungsdruck stufenweise erhöht und ein Meßwert gesichert, der einem Kupplungsdruck entspricht, bei dem die Motordrehzahl abzunehmen beginnt. Dieses Verfahren stützt sich jedoch auf den Drehwiderstand, der sich aufgrund einer Betätigung der Betriebsbremsen zur Verhinderung der Drehung der Getriebeausgangswelle ergibt. Die US-A-4,989,471 beschreibt auch ein alternatives Eichverfahren für eine Kupplung, bei dem erfaßt wird, wann die Kupplung genügend Drehmoment überträgt, um das Fahrzeug zu bewegen. Dieses alternative Verfahren erfordert es, daß das Fahrzeug zum Eichen an einen Ort gebracht wird, an dem keine Sicherheitsbedenken bestehen. Das von einem derartigen Verfahren abgeleitete Ergebnis hängt von den Eigenschaften des Untergrunds, auf dem das Fahrzeug steht, ab. Das beschriebene Verfahren hängt auch von Schwankungen der erfaßten Motordrehzahl ab und reagiert daher empfindlich auf unterschiedliche Motoren und Motordrehzahlregler.

Die US-A-5,456,647 beschreibt eine Getriebesteuerung für ein elektronisch gesteuertes Automatikgetriebe. Die Getriebesteuerung führt vor dem Verlassen des Montagebandes nacheinander für jedes seiner in Reibeingriff tretenden Elemente einen Lernmodus durch, um die erforderlichen Füllvolumen für die Reibeingriffselemente zu ermitteln. Während des Lernmodus wird die Getriebeausgangswelle festgesetzt, die Motordrehzahl konstant gehalten und es wird beim Anlegen eines jeden Reibeingriffselements der Drehzahlabfall der Getriebe eingangswelle, die mit der Turbine eines dem Motor nachgeordneten Drehmomentwandler verbunden ist, überwacht. Erreicht der Drehzahlabfall einen vorgebbaren Wert, so weist dies darauf hin, dass das Reibeingriffselement in Eingriff zu treten beginnt. Der zugehörige Füllvolumenwert wird als anfängliches Füllvolumen gespeichert und durch die Getriebesteuerung bei einem späteren Betrieb verwendet.

Die US-A-5,082,097 bezieht sich auf ein Eichsystem oder ein System zur Bestimmung eines Stromsignals, welches einem Wert entspricht, bei dem die Kupplung beginnt ein Drehmoment zu übertragen. Dieses System erfordert es, daß entweder die Fahrzeugbewegung oder der Motordrehzahlabfall erfaßt wird. Es hängt damit von Schwankungen der erfaßten Motordrehzahl ab und reagiert daher empfindlich auf unterschiedliche Motoren und Motordrehzahlregler. Es erfordert desweiteren Fahrzeugbewegungen, die gefährlich sein können.

Ein weiteres Eichverfahren wird in der US-A-5,224,577 beschrieben. Dieses Verfahren beinhaltet das Erfassen des Motordrehzahlabfalls und reagiert damit empfindlich auf unterschiedliche Motoren und Motordrehzahlregler.

Ein weiteres Eichverfahren wird durch die US-A-5,337,871 beschrieben. Dieses Verfahren erfordert Drucksensoren, die teuer und nicht so genau und zuverlässig sind, wie Drehzahlsensoren.

Die der Erfindung zugrunde liegende Aufgabe wird darin gesehen, ein Kalibrierverfahren oder ein Verfahren zur Bestimmung von Schlüsselparametern anzugeben, das für die Steuerung von Proportionalsteuerventilen eines Lastschaltgetriebes verwendet werden kann. Das Verfahren soll nicht durch die Verwendung unterschiedlicher Motoren oder Motordrehzahlregler beeinflußt werden. Die Durchführung des Verfahrens soll weder eine Bewegung des Fahrzeugs noch die Verwendung von Drucksensoren erfordern. Es soll auch nicht erforderlich sein, daß bei der Durchführung des Verfahrens ein wesentlicher Drehmomentbetrag über die Getriebeausgangswelle übertragen wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei einer bevorzugten Ausgestaltung der Erfindung wird verhindert, daß sich die Ausgangswelle des Getriebes dreht, indem entweder eine Parksperre eingelegt oder die Betriebsbremse betätigt wird. Der Motor wird bei einer konstanten Drehzahl betrieben. Bei der Eichung des Haltedrucks wird der Kupplungsdruck der zu eichenden Kupplung verändert, bis eine interne Getriebekomponente beschleunigt oder verzögert wird. Diese Beschleunigung oder Verzögerung wird überwacht, um festzustellen, wann der Haltedruck erreicht ist. Der Haltedruck ist definiert als der hydraulische Druck, bei dem beim Anlegen der Kupplung diese beginnt ein Drehmoment zu übertragen. Um eine Schnellfüllzeitdauer zu bestimmen, wird die zu eichende Kupplung so lange mit zunehmenden Zeitintervallen gefüllt, bis sie eingreift und das Eingriffsmoment einer andere Kupplung, die bei ihrem Haltedruck betrieben wird, überwindet, so daß ein inneres Getriebeelement von Null aus beschleunigt wird. Eine nennenswerte Beschleunigung zeigt an, daß die Kupplung gefüllt ist und die Schnellfüllzeit erreicht wurde. Alternativ hierzu kann die zu kalibrierende Kupplung auch mit zunehmenden Zeitintervallen so lange gefüllt werden, bis sie eingreift und das Eingriffsmoment einer anderen Kupplung, die bei ihrem Haltedruck betrieben wird, überwindet, so daß ein inneres Getriebeelement von einer bekannten Drehzahl aus verzögert wird. Eine nennenswerte Verzögerung zeigt an, daß die Kupplung gefüllt ist und die Schnellfüllzeit erreicht wurde. Die Schnellfüllzeit ist definiert als die erforderliche Zeit, um die Kupplung bei angelegtem vollen Druck nahezu vollständig zu füllen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das schematische Blockdiagramm einer mikroprozessorunterstützten Getriebesteuerung, bei der die vorliegende Erfindung anwendbar ist,
- Fig. 2: die schematische Darstellung eines Getriebes, bei dem die vorliegende Erfindung anwendbar ist,
- Fig. 3: die Beziehung der Figuren 4A und 4B zueinander,
- Fig. 4A und 4B: das vereinfachte Logikflußdiagramm, für ein erfindungsgemäßes Haltedruck-Eichverfahren,
- Fig. 5: die Beziehung der Figuren 6A und 6B zueinander,
- Fig. 6A und 6B: das vereinfachte Logikflußdiagramm für ein alternatives erfindungsgemäßes HaltedruckEichverfahren,
- Fig. 7: die Beziehung der Figuren 8A und 8B zueinander,
- Fig. 8A und 8B: das vereinfachte Logikflußdiagramm für ein erfindungsgemäßes Schnellfüllzeit-Eichverfahren,
- Fig. 9: die Beziehung der Figuren 10A und 10B zueinander,
- Fig. 10A und 10B: das vereinfachte Logikflußdiagramm für ein alternatives erfindungsgemäßes Schnellfüllzeit-Eichverfahren,

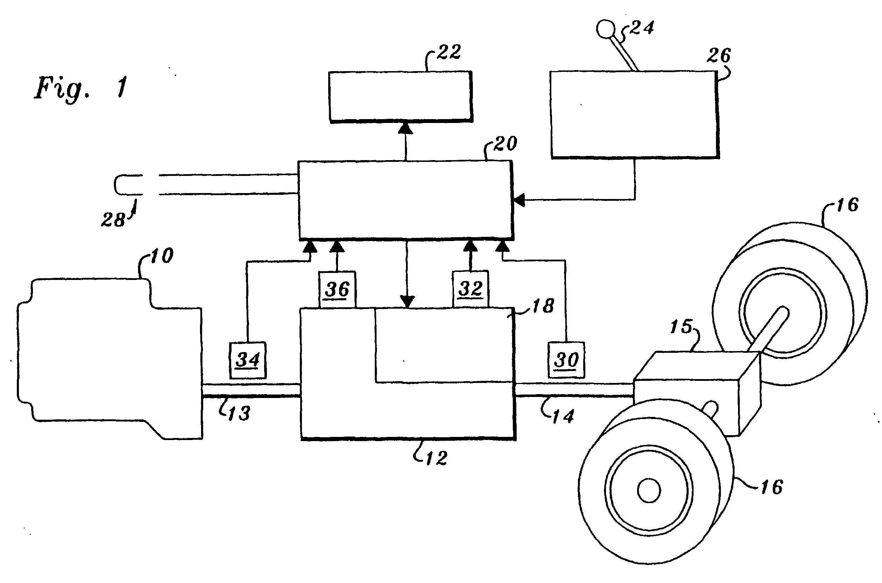

Wie in Fig. 1 gezeigt, enthält ein Fahrzeugantriebsstrang einen Motor 10, welcher über eine Eingangswelle 13 ein Lastschaltgetriebe 12 antreibt, welches seinerseits über eine Ausgangswelle 14 und ein Differential 15 die Räder 16 des Fahrzeugs antreibt. Das Lastschaltgetriebe 12 wird durch einen Satz von elektrohydraulischen Ventilen 18 betätigt, welche durch Signale eines einen Mikroprozessor enthaltenden Getriebesteuergeräts 20 gesteuert werden. Bei dem Getriebe 12 kann es sich beispielsweise um ein Lastschaltgetriebe der Firma Funk Manufacturing, Inc., USA vom Typ DF150, DF250, AG150 oder AG250 handeln.

Das Getriebesteuergerät 20 steht mit einer Anzeige-Ausgabe (Display) 22 sowie über ein Gangschaltkodiergerät 26 mit einem Gangschalthebel 24 in Verbindung. Bei dem Gangschaltkodiergerät 26 handelt es sich beispielsweise um ein handelsübliches Gerät, wie es von der Firma Funk Manufacturing für seine DF150 und DF250 Lastschaltgetriebe verwendet wird. Das Getriebesteuergerät 20 ist desweiteren mit einem elektrischen Überbrückungskabel (Jumper) 28 verbunden. Magnetische Drehzahlsensoren 30, 32, 34 und 36 liefern Drehzahlsignale an das Getriebesteuergerät 20, wie im folgenden näher beschrieben wird.

Das Getriebesteuergerät 20 enthält einen nicht näher gezeigten handelsüblichen Mikroprozessor, welcher in Reaktion auf den Jumper 28 ein Computer-Programm ausführt, das ein Eichverfahren, wie nachfolgend beschrieben, durchführt. Das Getriebesteuergerät 20 enthält desweiteren nicht näher gezeigte Ventiltreiber, welche pulsdauermodulierte Spannungssteuersignale mit variabler Einschaltdauer an die Ventile 18 liefert. Das Getriebesteuergerät 20 und die Ventiltreiber erzeugen derartige Steuersignale als Funktion verschiedener gemessener sowie durch die Bedienungsperson vorgegebener Eingangsgrößen, um einen gewünschten Kupplungsdruck einzustellen und um dadurch die Umschaltung des Getriebes 12 in gewünschter Weise zu steuern. Die vorliegende Erfindung betrifft jedoch nicht die Umschaltsteuerung des Getriebes 12 oder das Getriebe 12 und die Ventile 18 als solche, sondern das Eichen bestimmter Parameter. Das erfindungsgemäße Verfahren wird mittels eines Computer-Programms durch das Getriebesteuergerät 20 durchgeführt.

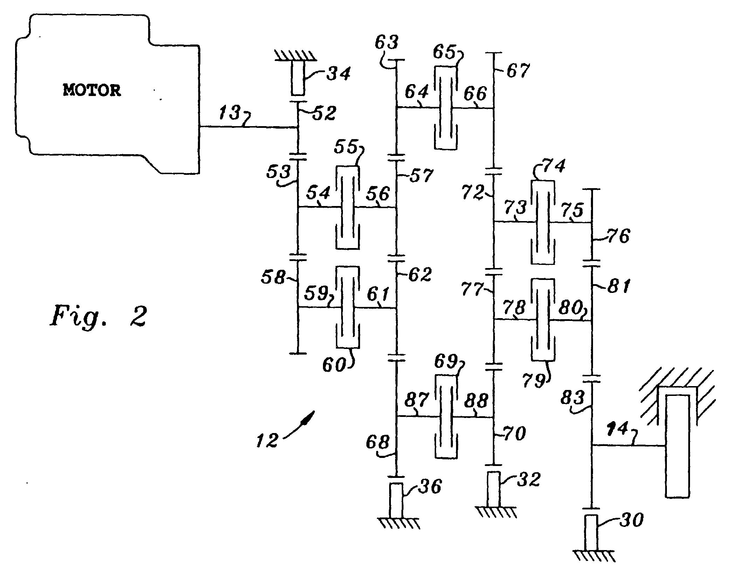

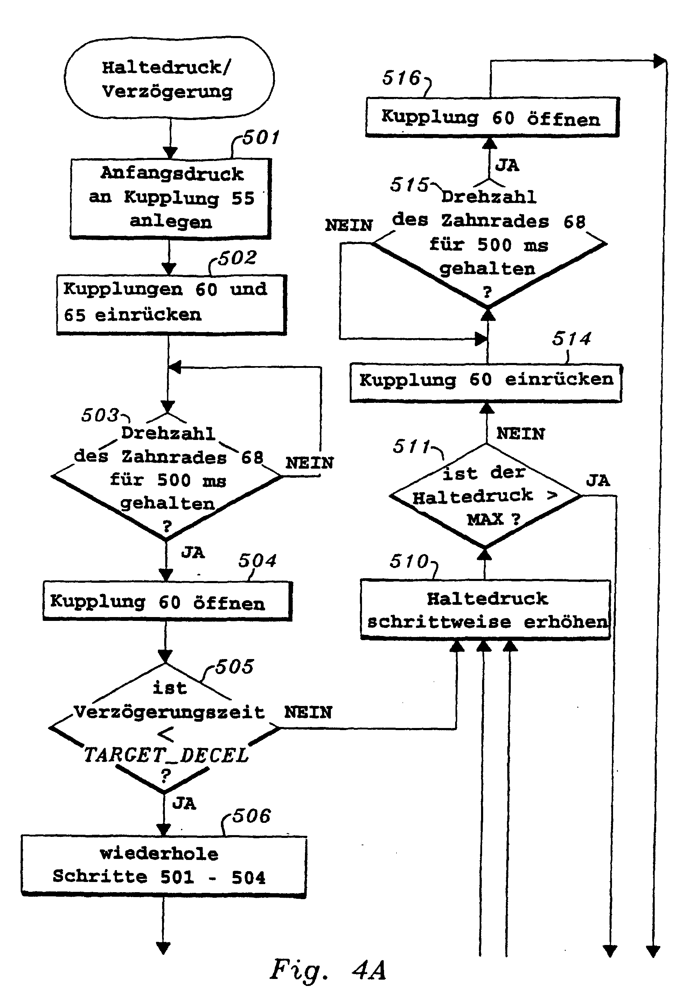

Das in Fig. 2 gezeigte Getriebe hat sechs Kupplungen 55, 60, 65, 69, 74 und 79. Die Eingangswelle 13 ist mit dem Zahrad 52 verbunden, welches mit den Zahnrädern 53 und 58 in Eingriff steht. Die Wellen 54 und 56 drehen bei gleicher Drehzahl, wenn die Kupplung 55 eingerückt ist. Die Wellen 64, 56, 61 und 87 sind mit den Zahnrädern 63, 57, 62 bzw. 68 verbunden. Die Wellen 64 und 66 drehen bei gleicher Drehzahl wenn die Kupplung 65 eingerückt ist. Die Wellen 87 und 88 drehen bei gleicher Drehzahl, wenn die Kupplung 69 eingerückt ist. Die Wellen 73 und 75 drehen bei gleicher Drehzahl, wenn die Kupplung 74 eingerückt ist. Die Wellen 78 und 80 drehen bei gleicher Drehzahl, wenn die Kupplung 79 eingerückt ist. Um Leistung von der Eingangswelle 13 an die Ausgangswelle 14 zu übertragen, müssen drei Kupplungen eingerückt werden: entweder 55 oder 60 und entweder 65 oder 69 sowie entweder 74 oder 79. Die Zahnräder 63, 57, 62, und 68 stehen in dauerdem Eingriff miteinander. Ebenso stehen die Zahnräder 67, 72, 77 und 70 in dauerndem Eingriff miteinander.

Der magnetische Drehzahlsensor 30 überwacht die Ausgangsdrehzahl des Getriebes 12. Der magnetische Drehzahlsensor 32 überwacht die Drehzahl des Zahrades 70 und liefert auch berechenbare Drehzahlen für die Zahnräder 67, 72 und 77. Der magnetische Drehzahlsensor 34 überwacht die Eingangsdrehzahl des Getriebes 12. Der magnetische Drehzahlsensor 36 überwacht die Drehzahl des Zahnrades 68 und liefert auch berechenbare Drehzahlen für die Zahnräder 62, 57 und 63. Das Zahnrad 76 ist mit der Welle 75 verbunden, und das Zahnrad 81 ist mit der Welle 80 verbunden. Die Zahnräder 76, 81 und 83 stehen miteinander in Eingriff, um Leistung an die Ausgangswelle 14 des Getriebes 12 auszugeben. Die Kupplungen 55, 60, 65, 69, 74 und 79 werden durch hydraulische Drücke, die von den elektrohydraulischen Ventilen 18 geliefert werden, aktiviert (eingerückt).

### Eichverfahren

### Haltedruck - Verzögerung

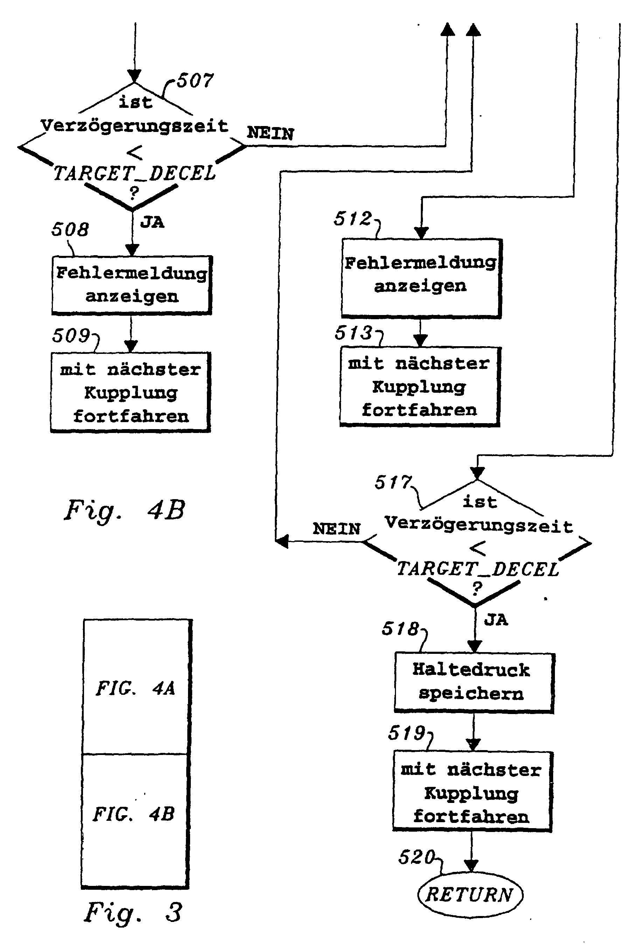

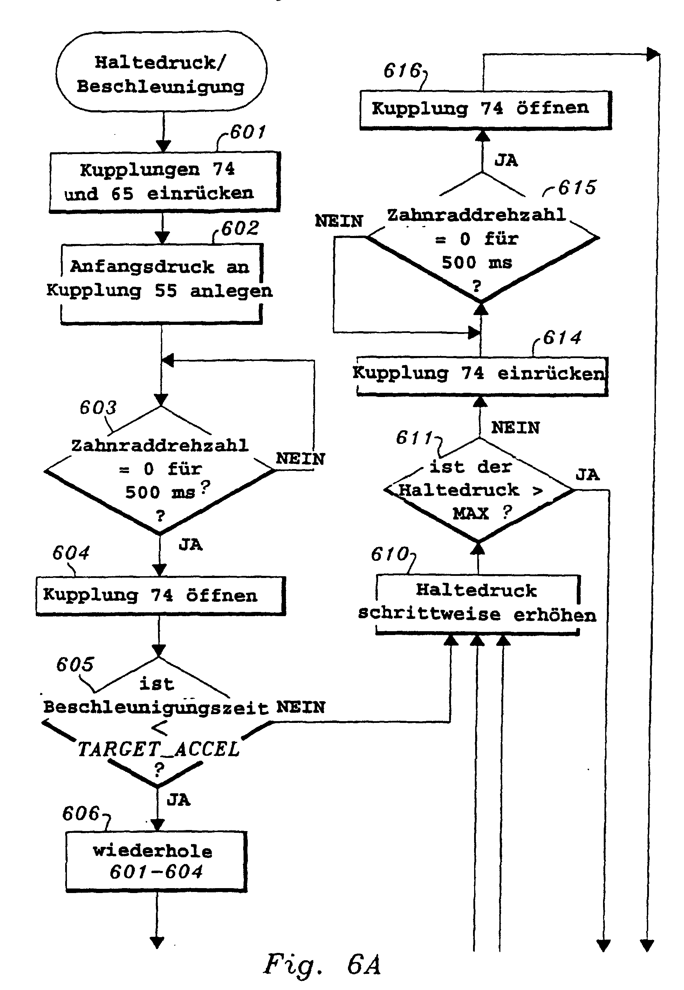

Das in den Figuren 3, 4A und 4B gezeigte Eichverfahren kann verwendet werden, um den Haltdruck für alle Kupplungen zu bestimmen. Das automatische Eichverfahren wird durch das Anschließen des Eich-Jumpers 28 an das Getriebesteuergerät 20 in Betrieb gesetzt. Auch wenn dies in Fig. 3 nicht dargestellt ist, führt das Getriebesteuergerät laufend Überprüfungen durch, um sicherzustellen, daß die nicht gezeigte Parkbremse betätigt ist, daß die Öltemperatur über ca. 20°C (69°F) liegt, daß die Motordrehzahl ungefähr bei 1500 rpm (Umdrehungen pro Minute) liegt und daß keine nennenswerte Ausgangswellendrehzahl feststellbar ist. Wenn durch irgendeine dieser Überwachungen ein Fehler festgestellt wird, wird das Programm vorzeitig abgebrochen. Wenn der Eich-Jumper 28 angeschlossen ist und die Motordrehzahl und die Parkbremse eingestellt sind, wird der Gangschalthebel 24 aus seiner Neutralstellung in seine Vorwärtsposition bewegt, um das Eichverfahren in Gang zu setzen. Tabelle 1 listet die Kupplungskombinationen auf die zur Bestimmung der Haltedrücke für die in Fig. 2 dargestellten Kupplungen verwendet werden.

**Tabelle 1**

| Haltedruck - Verzögerung | | | |
|---|---|---|---|
| zu eichende Kupplung | Kupplung Nr. 1 | Kupplung Nr. 2 | Drehzahl des Zahnrades |
| 55 | 60 | 65 | 68 |
| 60 | 55 | 65 | 68 |
| 65 | 55 | 74 | 68 |
| 69 | 55 | 74 | 68 |
| 74 | 55 | 65 | 70 |
| 79 | 55 | 65 | 70 |

Das Eichverfahren wird im folgenden für die Kupplung 55 beschrieben, bei der die Kupplung Nr. 1 die Kupplung 60 ist, die Kupplung Nr. 2 die Kupplung 65 ist und die Drehzahl des Zahnrades 68 durch den magnetischen Drehzahlsensor 36 überwacht wird. In Schritt 501 wird ein Anfangsdruck, beispielsweise 1,4 bar (20 psi) an die Kupplung 55 angelegt. In Schritt 502 werden die Kupplungen 60 und 65 vollständig eingerückt, was die Drehung sowohl des Eingangs- als auch des Ausgangselements der Kupplung 55 zur Folge hat. Schritt 503 überprüft den Drehzahlsensor 36, um festzustellen, ob während einer Zeitdauer von 500 Millisekunden (ms) das Zahnrad 68 eine korrekte Drehzahl beibehält. Wenn diese Zahnraddrehzahl für 500 ms beibehalten wurde, wird die Kupplung 60 in Schritt 504 geöffnet.

Die Drehzahl der mit dem Zahnrad 68 verbundenen Zahnräder und Wellen beginnt nun wegen des Profilwiderstandes (Reibung) und wegen der teilweise eingerückten Kupplung 55 abzufallen. Schritt 505 bestimmt den Zeitbetrag (Verzögerungszeit), der erforderlich ist, damit die Drehzahl des Zahnrades 68 um einen bestimmten Betrag abnimmt. Wird in Schritt 505 festgestellt, daß die gemessene Verzögerungszeit kleiner ist als eine gespeicherte Referenzzeit (target_decel), dann veranlaßt Schritt 506 eine Wiederholung der Schritte 501 bis 504. In Schritt 507 wird die Verzögerungszeit erneut gemessen und wenn sie immernoch kleiner als die Zielverzögerungszeit target_decel ist verursacht Schritt 508 eine geeignete Fehlermeldung, die auf dem Display 22 erscheint. Schritt 509 veranlaßt das Programm nun, den Haltedruck einer anderen Kupplungen zu bestimmen.

Ist in den Schritten 505 bis 507 die gemessene Verzögerungszeit nicht kleiner als target_decel, dann wird das Programm mit Schritt 510 fortgesetzt, welcher den Anfangsdruck um einen vorgebbaren Maßsprung erhöht. Schritt 511 überprüft dann, ob der angelegte Druck größer als oder gleich einem maximal zulässigen Haltedruck ist. Ist dies der Fall, dann veranlaßt Schritt 512 die Anzeige einer Fehlermeldung, und Schritt 513 veranlaßt das Programm den Haltedruck einer anderen Kupplung zu bestimmen. Andernfalls richtet Schritt 511 das Programm auf Schritt 514, welcher die Kupplung 60 wieder einrückt, so daß der Ausgang der Kupplung 55 (Welle 56 und Zahnrad 57) wieder in eine schnelle Drehzahl versetzt wird. Schritt 515 prüft dann wieder, ob eine bestimmte Zahnraddrehzahl für 500 ms beibehalten wurde, und wenn dies der Fall ist, öffnet Schritt 516 die Kupplung 60. Schritt 517 vergleicht wieder die Verzögerungszeit mit der Zielverzögerungszeit target_decel. Wenn die Verzögerungszeit größer ist, fährt das Programm mit Schritt 510 fort und erhöht den Druck um einen Maßsprung.

Erreicht schließlich der an die Kupplung 55 angelegte Druck den Haltedruckwert, beginnt die Kupplung 55 einzugreifen und ein Drehmoment an die Welle 56 und das Zahnrad 57 zu übertragen, wodurch die Drehzahl des Zahnrades 57 reduziert und das Zahnrad 57 veranlaßt wird, sich in eine Richtung zu drehen, die der von dem Eingriff der Kupplung 60 herrührenden Drehrichtung entgegengesetzt ist. Wenn dies geschieht und in Schritt 517 festgestellt wird, daß die gemessene Verzögerungzeit kleiner als die Zielverzögerungszeit target_decel ist, wird durch Schritt 518 der Haltedruck gespeichert. Schritt 519 veranlaßt dann, daß die Schritte 501 bis 518 für eine andere zu eichende Kupplung wiederholt werden. Damit wurde der Haltedruck durch Erfassung der Drehzahl einer inneren Getriebekomponente - Zahnrad 68 - bestimmt, ohne den Motordrehzahlabfall zu erfassen und ohne das Fahrzeug in Bewegung zu setzen.

### Haltedruck - Beschleunigung

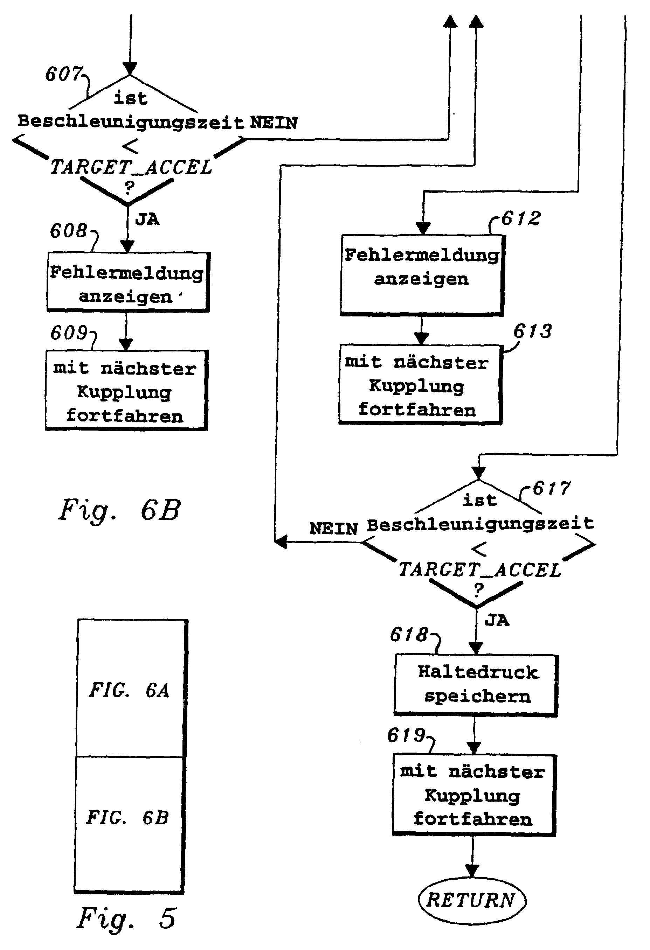

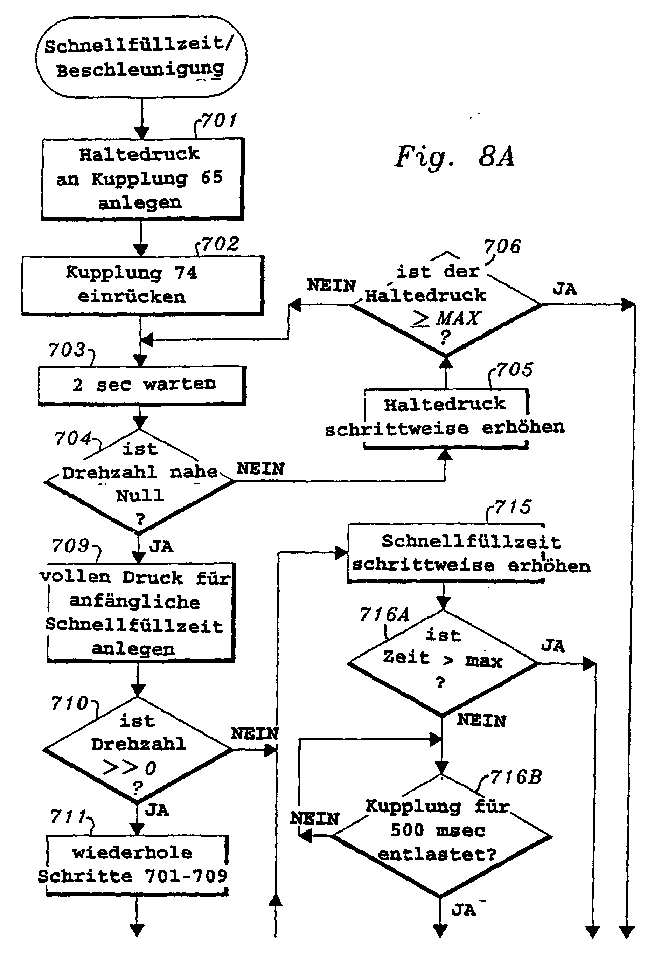

Aus den Figuren 5, 6A und 6B geht ein alternatives Eichverfahren hervor, bei dem der Haltedruck durch Messung der Beschleunigung einer inneren Komponente des Getriebes 12 bestimmt wird. Bei dem beschriebenen Getriebe 12 läßt sich das Verfahren auf alle Kupplungen, außer auf die Kupplungen 74 und 79, anwenden. Tabelle 2 listet die Kupplungskombinationen zur Bestimmung der Haltedrücke für die Kupplungen 55, 60, 65 und 69 auf.

**Tabelle 2**

| Haltedruck - Beschleunigung | | | |
|---|---|---|---|
| zu eichende Kupplung | Kupplung Nr. 1 | Kupplung Nr. 2 | Drehzahl des Zahnrades |
| 55 | 74 | 65 | 68 |
| 60 | 74 | 65 | 68 |
| 65 | 74 | 55 | 70 |
| 69 | 74 | 55 | 70 |

Anhand der Figuren 6A und 6B wird nun das Eichverfahren für die Kupplung 55 beschrieben, bei dem die Kupplung Nr. 1 die Kupplung 74 ist, die Kupplung Nr. 2 die Kupplung 65 ist und die Drehzahl des Zahnrades 68 durch den magnetischen Drehzahlsensor 36 überwacht wird. In Schritt 601 werden die Kupplungen 74 und 65 voll eingerückt, so daß eine Drehung des Ausgangs der Kupplung 55 und des Zahnrades 57 verhindert wird. In Schritt 602 wird ein Anfangsdruck an die Kupplung 55 angelegt. Schritt 603 überprüft, ob die Drehzahl des Zahnrades 68 für wenigstens 500 ms Null rpm ist. Schritt 604 löst die Kupplung 74 und erlaubt damit, das ein beliebiges Drehmoment durch die Kupplung 55 übertragen wird, durch die das Zahnrad 68 beschleunigt wird.

Schritt 605 mißt, welche Zeit es bei dem Anfangsdruck erfordert, um das Zahnrad 68 auf eine vorbestimmte Zieldrehzahl zu beschleunigen. Ist diese Zeit kleiner als eine Zielbeschleunigungszeit target_accel, dann veranlaßt Schritt 606 eine Wiederholung der Schritte 601 bis 604. Schritt 607 mißt die Zeit, die es erfordert, um das Zahnrad 68 auf die vorbestimmte Zieldrehzahl zu beschleunigen. Wenn diese Zeit immernoch kleiner als die Zielbeschleunigungszeit target_accel ist, dann gibt Schritt 608 eine entsprechende Fehlermeldung über das Display 22 aus und das Programm fährt mit Schritt 609 fort, um den Haltedruck der nächsten Kupplung zu bestimmen.

Wenn in den Schritten 605 oder 607 festgestellt wird, daß die Beschleunigung auf die vorbestimmte Drehzahl nicht kleiner ist als die Zielbeschleunigungszeit target_accel, schreitet das Programm zu Schritt 610 weiter, durch den der Anfangsdruck um eine Stufe erhöht und an die Kupplung 55 angelegt wird. Wenn der angelegte Druck größer als oder gleich einem maximalen Haltedruck ist, richtet Schritt 611 das Programm auf Schritt 612, der eine Fehlermeldung auf dem Display 22 veranlaßt. Das Programm wird dann in Schritt 613 mit der nächsten Kupplung fortgesetzt. Andernfalls wird durch Schritt 614 die Kupplung 74 eingerückt, und durch Schritt 615 wird wiederholt geprüft, ob die Drehzahl des Zahnrades 68 für 500 ms Null rsm ist. Ist dies der Fall, fährt das Programm mit Schritt 616 fort, durch den die Kupplung 74 geöffnet wird.

Das Öffnen der Kupplung 74 erlaubt es, daß ein beliebiges Drehmoment durch die Kupplung 55 übertragen wird, um das Zahnrad 68 zu beschleunigen. Schritt 617 vergleicht wieder die gemessene Beschleunigungszeit mit der gespeicherten Referenzzeit (target_accel). Wenn die gemessene Beschleunigungszeit größer als target_accel ist, bedeuted dies, daß der an die Kupplung 55 angelegte Druck noch nicht ausreicht, um den Eingriffsvorgang der Kupplung zu initiieren. In diesem Fall wird der Druck durch Schritt 610 um eine Stufe erhöht. Die Schleife wird fortgesetzt bis die gemessene Beschleunigungszeit kleiner als die Zielbeschleunigungszeit target_accel ist, dann wird durch Schritt 618 der Haltedruck als Eichwert gespeichert. Schritt 619 wiederholt das Verfahren für die anderen in Tabelle 2 aufgelisteten Kupplungen.

Es sei bemerkt, daß mit diesem Verfahren über die Kupplung 55 lediglich ein minimales Drehmoment übertragen wird. Dies hat lediglich eine sehr geringen Einfluß auf ein Absinken der Motordrehzahl, so daß die Eichergebnisse nicht durch unterschiedliche Motorcharakteristiken beeinflußt werden.

### Schnellfüllzeit - Beschleunigung

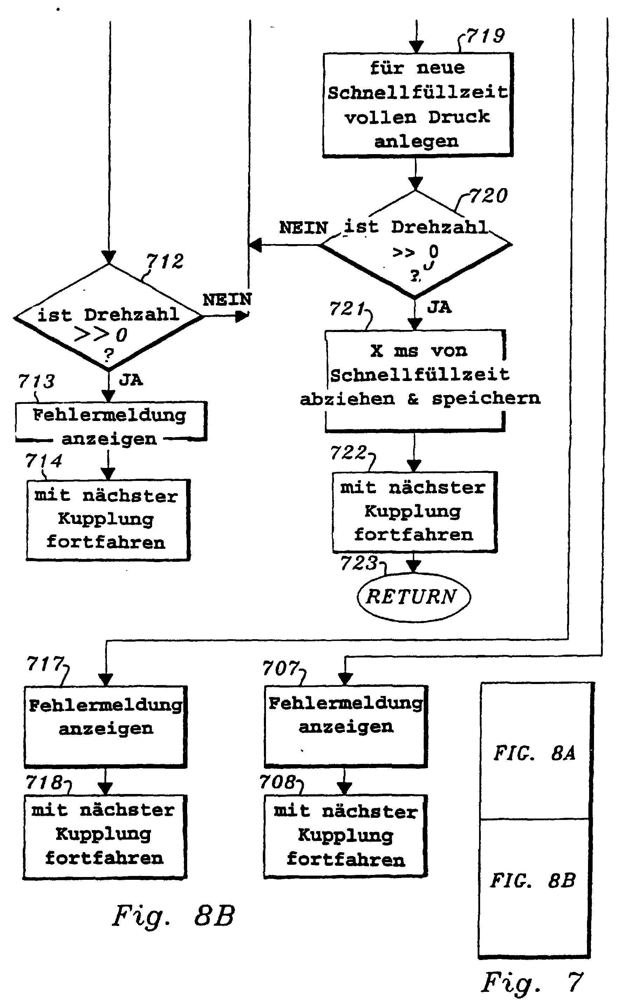

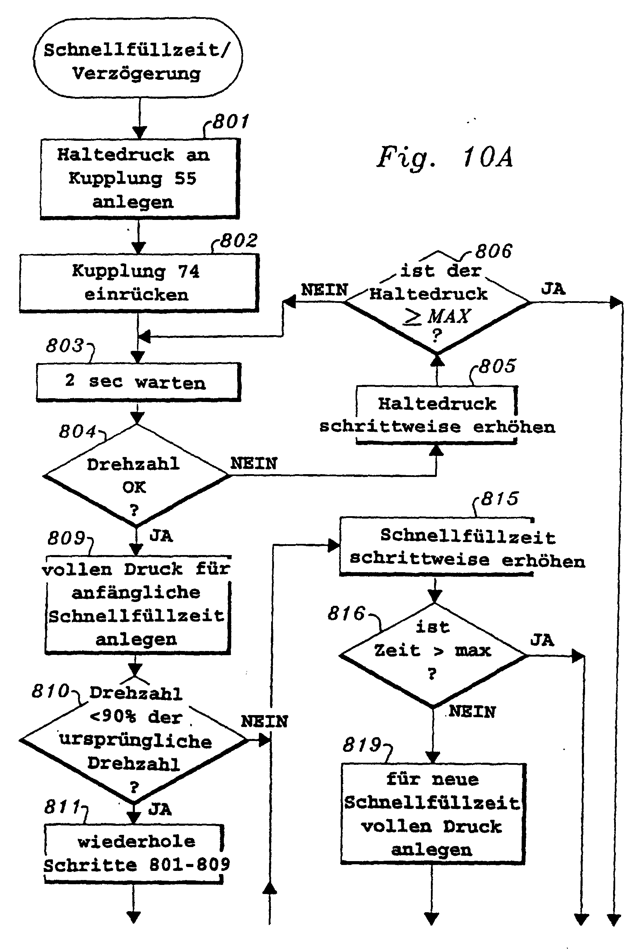

Die Figuren 7, 8A und 8B zeigen ein Eichverfahren, bei dem eine Schnellfüllzeit durch Messung der Beschleunigung einer inneren Komponente des Getriebes 12 bestimmt wird. Bei dem beschriebenen Getriebe 12 läßt sich das Verfahren auf alle Kupplungen, außer auf die Kupplungen 74 und 79, anwenden. Tabelle 3 listet die Kupplungskombinationen zur Bestimmung der Schnellfüllzeiten für die Kupplungen 55, 60, 65 und 69 auf.

**Tabelle 3**

| Schnellfüllzeit - Beschleunigung | | | |
|---|---|---|---|
| zu eichende Kupplung | Kupplung Nr. 1 | Kupplung Nr. 2 | Drehzahl des Zahnrades |
| 55 | 65 | 74 | 68 |
| 60 | 65 | 74 | 68 |
| 65 | 74 | 55 | 70 |
| 69 | 74 | 55 | 70 |

Anhand der Figuren 8A und 8B wird nun das Eichverfahren für die Kupplung 55 beschrieben, bei dem die Kupplung Nr. 1 die Kupplung 65 ist, die Kupplung Nr. 2 die Kupplung 74 ist und die Drehzahl des Zahnrades 68 durch den magnetischen Drehzahlsensor 36 überwacht wird. Schritt 701 legt an die Kupplung 65 den vorher für diese Kupplung 65 bestimmten Haltedruck an (dies begrenzt den Drehmomentenbetrag, der auf die Ausgangswelle 14 übertragen werden kann). Schritt 702 legt an die Kupplung 74 den vollen Druck an (dies verhindert eine Drehung des Ausgangs der Kupplung 65). Nachdem eine Wartezeit von 2 Sekunden in Schritt 703 eingehalten wurde, wird durch Schritt 704 geprüft, ob die Drehzahl des Zahnrades 68 nahe Null ist. Ist die Zahnraddrehzahl nicht richtig, wird in Schritt 705 der Haltedruck für die Kupplung 65 um eine Stufe erhöht, und in Schritt 706 wird geprüft, ob der Haltedruck den maximal zulässigen Wert überschritten hat. Ist dies der Fall, dann wird durch Schritt 707 eine Fehlermeldung über das Display 22 ausgegeben und durch Schritt 708 fortgefahren, die Schnellfüllzeit für eine weitere Kupplung zu ermitteln. Wenn der maximale Haltedruck in Schritt 706 nicht überschritten wurde, dann wird nach einer Wartezeit von 2 Sekunden in Schritt 703 durch Schritt 704 die Drehzahl des Zahnrades 68 erneut geprüft. Diese Schleife wird fortgesetzt bis eine Zahnraddrehzahl von nahezu Null oder bis der maximale Haltedruck der Kupplung 65 erreicht ist.

Wenn eine Zahnraddrehzahl von nahe Null eingestellt ist, legt Schritt 709 an die Kupplung 55 den vollen Druck für eine anfängliche Testzeitdauer, nach der die Kupplung 55 wieder vollständig geöffnet wird. Schritt 710 prüft, ob die Drehzahl des Zahnrades 68 sich wesentlich von Null aus beschleunigt hat. Dies tritt ein, wenn genügend Öl die Kupplung 55 füllt, um deren nicht dargestellen Kolben gegen seine nicht dargestellte Platten zu drängen und die Übertragung eines Drehmomentes einzuleiten. Wenn die Kupplung 55 ein ausreichendes Drehmoment überträgt, überwindet dieses Drehmoment den Haltedruck der Kupplung 65 und veranlaßt die Zahnräder 63, 57, 62 und 68 sich von Null aus zu beschleunigen. Wenn die Drehzahl des Zahnrades 68 sich nicht erheblich von Null aus beschleunigt hat, werden durch Schritt 711 die Schritte 701 bis 710 wiederholt. Dann wird in Schritt 712 eine weitere Überprüfung durchgeführt, um festzustellen, ob die Zahnraddrehzahl immer noch wesentlich über Null liegt. Ist dies der Fall, wird durch Schritt 713 eine geeignete Fehlermeldung über das Display 22 ausgegeben und das Programm fährt in Schritt 714 fort, um die Schnellfüllzeit für die nächste Kupplung zu bestimmen.

Wenn in Schritt 710 oder Schritt 712 die Drehzahl des Zahnrades 68 sich nicht wesentlich über Null beschleunigt hat, wird in Schritt 715 die Schnellfüllzeitspanne um eine kleine Stufe, beispielsweise um 5 ms, erhöht. Wenn diese erhöhte Schnellfüllzeitdauer einen maximalen Zeitwert überschreitet, geben die Schritte 716A und 717 über das Display 22 eine Fehlermeldung aus, und Schritt 718 fährt fort, um die Schnellfüllzeit für eine nächste Kupplung zu ermitteln. Andernfalls verzögert Schritt 716B den Ablauf, bis die Kupplung für wenigstens 1250 ms vom Druck befreit ist. Dann legt Schritt 719 für die neue erhöhte Schnellfüllzeitdauer den vollen Druck an die Kupplung 55 an und kuppelt sie danach wieder aus. Schritt 720 prüft, ob die Drehzahl des Zahnrades 68 zugenommen hat. Wenn nicht, werden die Schritte 715 bis 720 wiederholt. Schließlich, wenn die Schnellfüllzeitdauer lang genug wird, wird die Kupplung 55 gefüllt und das Zahrad 68 beschleunigt. Schritt 720 richtet den Algorithmus auf Schritt 721, welcher ein kleines empirisch bestimmtes Zeitinkrement von der vorher durch Schritt 715 eingestellten Schnellfüllzeit abzieht. Diese modifizierte Schnellfüllzeit wird als Eichschnellfüllzeit der Kupplung 55 gespeichert. Der empirisch ermittelte Betrag x (ms) wird von der Schnellfüllzeit abgezogen, so daß die Kupplung 55 am Ende der Schnellfüllzeit nicht vollständig gefüllt wird. Durch Schritt 722 wird das Programm für die nächste Kupplung wiederholt bis die Schnellfüllzeit mittels der Beschleunigungsmethode für alle gewünschten Kupplungen ermittelt wurde.

### Schnellfüllzeit - Verzöqerunq

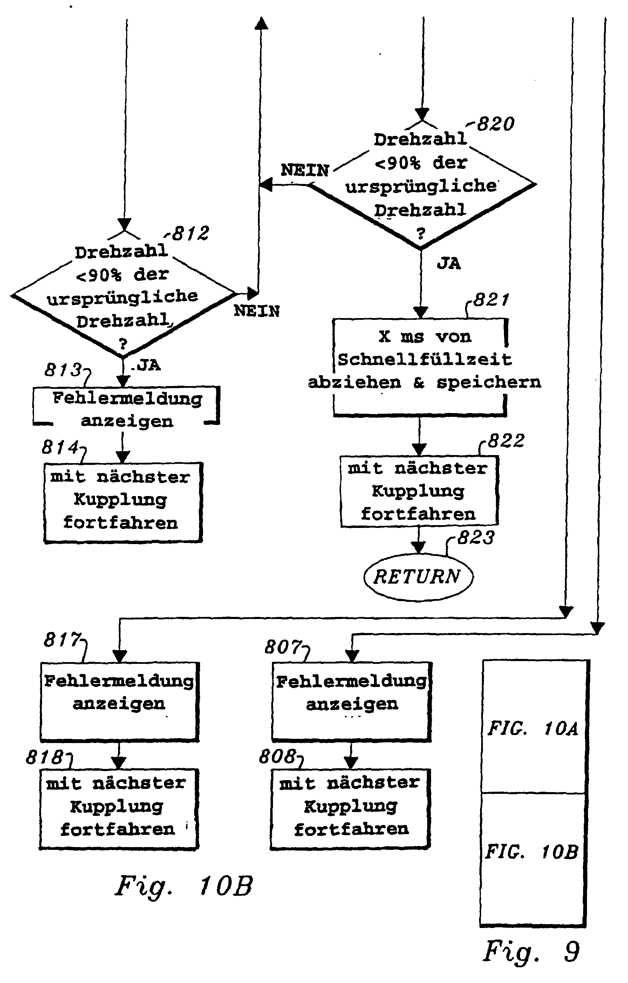

Die Figuren 9, 10A und 10B zeigen ein Eichverfahren, bei dem eine Schnellfüllzeit durch Messung der Verzögerung einer inneren Komponente des Getriebes 12 bestimmt wird. Bei dem beschriebenen Getriebe 12 läßt sich das Verfahren auf alle Kupplungen, außer auf die Kupplungen 55 und 60, anwenden. Tabelle 4 listet die Kupplungskombinationen zur Bestimmung der Schnellfüllzeiten für die Kupplungen 65, 69, 74 und 79 auf.

**Tabelle 4**

| Schnellfüllzeit - Verzöqerunq | | | |
|---|---|---|---|
| zu eichende Kupplung | Kupplung Nr. 1 | Kupplung Nr. 2 | Drehzahl des Zahnrades |
| 65 | 55 | 74 | 68 |
| 69 | 55 | 74 | 68 |
| 74 | 65 | 55 | 70 |
| 79 | 65 | 55 | 70 |

Anhand der Figuren 10A und 10B wird nun das Eichverfahren für die Kupplung 65 beschrieben, bei dem die Kupplung Nr. 1 die Kupplung 55 ist, die Kupplung Nr. 2 die Kupplung 74 ist und die Drehzahl des Zahnrades 68 durch den magnetischen Drehzahlsensor 36 überwacht wird. Schritt 801 legt an die Kupplung 55 den vorher für diese Kupplung 55 bestimmten Haltedruck an. Schritt 802 legt an die Kupplung 74 den vollen Druck an. Hierdurch wird ein kleiner Drehmomentbetrag an den Eingang der Kupplung 65 übertragen und das Ausgangselement der Kupplung 65 festgehalten. Nachdem eine Wartezeit von 2 Sekunden in Schritt 803 eingehalten wurde, wird durch Schritt 804 geprüft, ob die Drehzahl des Zahnrades 68 korrekt ist. Ist die Zahnraddrehzahl nicht richtig, wird in Schritt 805 der Haltedruck für die Kupplung 55 um eine Stufe erhöht, und in Schritt 806 wird geprüft, ob der Haltedruck den maximal zulässigen Wert überschritten hat. Ist dies der Fall, dann wird durch Schritt 807 eine Fehlermeldung über das Display 22 ausgegeben und durch Schritt 808 fortgefahren, die Schnellfüllzeit für eine weitere Kupplung zu ermitteln. Wenn der maximale Haltedruck in Schritt 806 nicht überschritten wurde, dann wird nach einer Wartezeit von 2 Sekunden in Schritt 803 durch Schritt 804 die Drehzahl des Zahnrades 68 erneut geprüft. Diese Schleife wird fortgesetzt bis eine korrekte Zahnraddrehzahl erreicht ist.

Wenn eine korrekte Zahnraddrehzahl eingestellt ist, legt Schritt 809 an die Kupplung 65 den vollen Druck für eine anfängliche Schnellfüllzeitdauer, nach der die Kupplung 65 wieder vollständig geöffnet wird. Schritt 810 prüft dann, ob die Drehzahl des Zahnrades 68 unter 90% der urspünglichen Drehzahl verzögert wurde. Trifft dies zu, bedeutet dies, daß ausreichend Öl die Kupplung 65 füllt, so daß deren Ausgang blockiert und den Haltedruck der Kupplung 55 überwindet, so daß die Drehung der Zahnräder 63, 57, 62 und 68 sich verlangsamt. Wenn die Drehzahl des Zahnrades 68 sich unter 90% ihres ursprünglichen Wertes verzögert, werden durch Schritt 811 die Schritte 801 bis 810 wiederholt. Dann wird in Schritt 812 eine weitere Überprüfung durchgeführt und wenn die Drehzahl des Zahnrades 68 immer noch unter 90% ihres ursprünglichen Wertes liegt, wird durch Schritt 813 eine Fehlermeldung über das Display 22 ausgegeben und durch Schritt 814 das Programm veranlaßt, die Schnellfüllzeit für die nächste Kupplung zu bestimmen.

Wenn in Schritt 810 oder Schritt 812 die Drehzahl des Zahnrades 68 nicht auf 90% seines ursprünglichen Wertes verzögert wurde, dann wird in Schritt 815 die Schnellfüllzeitspanne stufenweise um einen Wert von beispielsweise 5 ms erhöht. Diese neue Schnellfüllzeit wird in Schritt 816 überprüft, um zu gewährleisten; daß sie nicht die maximal zulässige Zeit überschreitet. Wenn sie es tut, dann wird durch Schritt 817 eine Fehlermeldung über das Display 22 ausgegeben und Schritt 818 fährt fort, um die Schnellfüllzeit für eine nächste Kupplung zu ermitteln. Andernfalls wird durch Schritt 819 der volle Druck an die Kupplung 65 für die Dauer der neuen Schnellfüllzeit, die durch Schritt 815 ermittelt wurde, angelegt. Die Schritte 815 bis 820 werden wiederholt, bis die Drehzahl des Zahnrades 68 auf weniger als 90% ihres urspünglichen Wertes verzögert ist. Wenn dies eintritt, subtrahiert Schritt 821 ein kleines Zeitinkrement von der Schnellfüllzeit, und dieser modifizierte Wert wird als Schnellfüllzeitwert für die Kupplung 65 gespeichert.

## Patentansprüche

1. Verfahren zum Eichen einer Steuerkupplung eines Getriebes, wobei das Getriebe eine mit einem Motor verbundene Eingangswelle, eine Ausgangswelle und mehrere Steuerkupplungen aufweist, die jede ein Drehmomente empfangendes Eingangselement und ein Ausgangselement aufweisen, mit folgenden Verfahrensschritten:
a) Aufrechteerhalten einer im wesentlichen konstanten Motordrehzahl,
b) Anlegen eines hydraulischen Testdrucksignals an die zu eichende Kupplung oder an eine der zu eichenden Kupplung vor- oder nachgeschaltete Kupplung,
c) Erfassen der Drehzahl einer inneren Getriebekomponente, die nicht die Eingangswelle oder die Ausgangswelle ist,
d) Auswerten der erfaßten Drehzahl und
e) Abspeichern eines dem angelegten Testdrucksignal entsprechenden Wertes als Eichwert, sofern die Auswertung vorherbestimmte Kriterien erfüllt, und
f) Abändern des Testdrucksignals und Wiederholen der Schritte b) bis f), sofern die Auswertung die vorherbestimmten Kriterien nicht erfüllt.

2. Verfahren nach Anspruch 1, **dadurch gekennzeichnet, daß** das Getriebe in einem Zustand gehalten wird, in dem kein wesentliches Drehmoment vom Motor zur Ausgangswelle übertragen wird.

3. Verfahren nach Anspruch 1 oder 2, **gekennzeichnet durch** die Verfahrensschritte:
a) Anlegen eines Testdruckes an die zu kalibrierende Kupplung,
b) volles Einrücken wenigstens einer zweiten Kupplung, so daß sich alle Teile der zu eichenden Kupplung drehen,
c) volles Ausrücken der zweiten Kupplung,
d) Erfassen der Drehzahl eines inneren Getriebeelements, welches **durch** das Ausgangselement der zu eichenden Kupplung angetrieben wird,
e) Auswerten der erfaßten Drehzahl und
f) Abspeichern eines dem angelegten Testdrucks entsprechenden Wertes als Eichwert, sofern die Auswertung vorherbestimmte Kriterien erfüllt, und
g) Abändern des Testdrucks und Wiederholen der Schritte b) bis g), sofern die Auswertung die vorherbestimmten Kriterien nicht erfüllt.

4. Verfahren nach Anspruch 1 oder 2, **gekennzeichnet durch** die Verfahrensschritte:
a) volles Einrücken wenigstens einer zweiten Kupplung, um die Drehung des Ausgangselements der zu eichenden Kupplung zu verhindern,
b) Anlegen eines Testdrucks an die zu eichende Kupplung,
c) volles Ausrücken der zweiten Kupplung,
d) Erfassen der Drehzahl eines Getriebeelements, welches **durch** das Ausgangselement der zu eichenden Kupplung angetrieben wird,
e) Auswerten der erfaßten Drehzahl und
f) Abspeichern eines dem angelegten Testdrucks entsprechenden Wertes als Eichwert, sofern die Auswertung vorherbestimmte Kriterien erfüllt, und
g) Abändern des Testdrucks und Wiederhohlung der Schritte b) bis g), sofern die Auswertung die vorherbestimmten Kriterien nicht erfüllt.

5. Verfahren nach Anspruch 3 oder 4, **dadurch gekennzeichnet, daß** der Auswerteschritt folgende Schritte enthält:
Bestimmung der Zeitdauer, die zum Abfallen oder Ansteigen der erfaßten Drehzahl auf einen bestimmten Wert erforderlich ist, und
Vergleichen der bestimmten Zeitdauer mit einem gespeicherten Referenzzeitwert.

6. Verfahren nach Anspruch 4 oder 5, **dadurch gekennzeichnet, daß** zwischen den Schritten b) und c) des Anspruchs 4 die Verfahrensschritte eingefügt werden:
Erfassen der Drehzahl eines Getriebeelements, welches durch das Ausgangselement der zu eichenden Kupplung angetrieben wird,
Unterdrückung weiterer Verfahrensschritte, wenn die erfaßte Drehzahl für eine bestimmte Zeitdauer nicht kleiner ist als eine festgelegte Drehzahl.

7. Verfahren nach einem der Ansprüche 1 bis 6, **gekennzeichnet durch** die Verfahrensschritte:
a) Anlegen eines Haltedrucks an eine zweite Kuplung, die mit dem Ausgangselement der zu eichenden Kupplung in Verbindung steht, wobei der Haltedruck einem Druck entspricht, bei dem die zweite Kupplung beginnt Drehmomente zu übertragen,
b) Anlegen eines vollen Drucks an eine dritte Kupplung, die mit dem Ausgangselement der zweiten Kupplung in Verbindung steht, um die Drehung des Ausgangselements der zweiten Kupplung zu verhindern,
c) Anlegen des vollen Drucks an die zu eichende Kupplung während einer Schnellfüllzeitdauer und hieran anschließend Anlegen des Drucks eines Vorratsbehälters an die zu eichende Kupplung,
d) Erfassen der Drehzahl eines Getriebeelements, welches **durch** das Ausgangselement der zu eichenden Kupplung angetrieben wird,
e) Auswerten der erfaßten Drehzahl und Abspeichern eines der Schnellfüllzeitdauer entsprechenden Wertes als Eichwert, sofern die Auswertung vorherbestimmte Kriterien erfüllt, und Abändern der Schnellfüllzeitdauer und Wiederholen der Schritte c) bis e), sofern die Auswertung die vorherbestimmten Kriterien nicht erfüllt.

8. Verfahren nach Anspruch 7, **dadurch gekennzeichnet, daß** in dem Auswerteschritt die erfaßte Drehzahl mit einer gespeicherten Referenzdrehzahl verglichen wird.

9. Verfahren nach einem der Ansprüche 1 bis 6, **gekennzeichnet durch** die Verfahrensschritte:
a) Anlegen eines Haltedrucks an eine zweite Kupplung, die mit dem Eingangselement der zu eichenden Kupplung in Verbindung steht, wobei der Haltedruck einem Druck entspricht, bei dem die zweite Kupplung beginnt Drehmomente zu übertragen,
b) Anlegen eines vollen Drucks an eine dritte Kupplung, die mit dem Ausgangselement der zu eichenden Kupplung in Verbindung steht, um die Drehung besagten Ausgangselements zu verhindern,
c) Anlegen des vollen Drucks an die zu eichende Kupplung während einer Schnellfüllzeitdauer und hieran anschließend Anlegen des Drucks eines Vorratsbehälters an die zu eichende Kupplung,
d) Erfassen der Drehzahl eines Getriebeelements, welches **durch** das Eingangselement der zu eichenden Kupplung angetrieben wird,
e) Auswerten der erfaßten Drehzahl und Abspeichern eines der Schnellfüllzeitdauer entsprechenden Wertes als Eichwert, sofern die Auswertung vorherbestimmte Kriterien erfüllt, und Abändern der Schnellfüllzeitdauer und Wiederholen der Schritte c) bis e), sofern die Auswertung die vorherbestimmten Kriterien nicht erfüllt.

10. Verfahren nach einem der Ansprüche 9, **dadurch gekennzeichnet, daß** der Auswerteschritt folgenden Schritt enthält:
Bestimmung einer Änderung in der erfaßten Drehzahl und Vergleichen der Änderung mit einem gespeicherten Referenzwert.

## Claims

1. A method of calibrating a control clutch of a transmission, wherein the transmission comprises an input shaft connected to an engine, an output shaft and a plurality of control clutches, each of which has a torque-receiving input element and an output element, with the following method steps:
a) maintaining a substantially constant engine speed,
b) applying a hydraulic test pressure signal to the clutch to be calibrated or to a clutch preceding or following the clutch to be calibrated,
c) detecting the speed of rotation of an internal transmission component which is not the input shaft or the output shaft,
d) analysing the detected speed of rotation and
e) storing a value corresponding to the applied test pressure signal as a calibration value, insofar as the analysis fulfils previously determined criteria, and
f) altering the test pressure signal and repeating steps b) to f), insofar as the analysis does not fulfil the previously determined criteria.

2. A method according to claim 1, **characterized in that** the transmission is held in a state in which no significant torque is transmitted from the engine to the output shaft.

3. A method according to claim 1 or 2, **characterized by** the method steps:
a) applying a test pressure to the clutch to be calibrated,
b) fully engaging at least one second clutch, so that all parts of the clutch to be calibrated rotate,
c) fully disengaging the second clutch,
d) detecting the speed of rotation of an internal transmission element which is driven by the output element of the clutch to be calibrated,
e) analysing the detected speed of rotation and
f) storing a value corresponding to the applied test pressure as a calibration value, insofar as the analysis fulfils previously determined criteria, and
g) altering the test pressure and repeating steps b) to g) insofar as the analysis does not fulfil the previously determined criteria.

4. A method according to claim 1 or 2, **characterized by** the method steps:
a) fully engaging at least one second clutch, in order to the prevent the rotation of the output element of the clutch to be calibrated,
b) applying a test pressure to the clutch to be calibrated,
c) fully disengaging the second clutch,
d) detecting the speed of rotation of a transmission element which is driven by the output element of the clutch to be calibrated,
e) analysing the detected speed of rotation, and
f) storing a value corresponding to the applied test pressure as a calibration value, insofar as the analysis fulfils previously determined criteria, and
g) altering the test pressure and repeating steps b) to g) insofar as the analysis does not fulfil the previously determined criteria.

5. A method according to claim 3 or 4, **characterized in that** the analysis step includes the following steps:
determining the length of time which is required in order to reduce or increase the speed of rotation to a predetermined value and comparing the determined length of time with a stored reference value.

6. A method according to claim 4 or 5, **characterized in that**, in between the steps b) and c) of claim 4, the following method steps are introduced:
detecting the speed of rotation of a transmission element which is driven by the output element of the clutch to be calibrated,
suppressing further method steps when the detected speed of rotation is not smaller than a specified speed of rotation for a predetermined length of time.

7. A method according to any of claims 1 to 6, **characterized by** the method steps:
a) applying a holding pressure to a second clutch which is coupled to the output element of the clutch to be calibrated, wherein the holding pressure corresponds to a pressure at which the second clutch begins to transmit torque,
b) applying full pressure to a third clutch which is coupled to the output element of the second clutch, in order to prevent rotation of the output element of the second clutch,
c) applying the full pressure to the clutch to be calibrated during a rapid fill time and then applying the pressure of a reservoir to the clutch to be calibrated,
d) detecting the speed of rotation of a transmission element which is driven by the output element of the clutch to be calibrated,
e) analysing the detected speed of rotation and storing a value corresponding to the rapid fill time as a calibration value, insofar as the analysis fulfils predetermined criteria, and changing the rapid fill time and repeating steps c) to e), insofar as the analysis does not fulfil the predetermined criteria.

8. A method according to claim 7, **characterized in that** the detected speed of rotation is compared in the analysis step with a stored reference speed of rotation.

9. A method according to any of claims 1 to 6, **characterized by** the method steps:
a) applying a holding pressure to a second clutch which is coupled to the input element of the clutch to be calibrated, wherein the holding pressure corresponds to a pressure at which the second clutch begins to transmit torque,
b) applying full pressure to a third clutch which is coupled to the output element of the clutch to be calibrated, in order to prevent rotation of the said output element,
c) applying the full pressure to the clutch to be calibrated during a rapid fill time and then applying the pressure of a reservoir to the clutch to be calibrated,
d) detecting the speed of rotation of a transmission element which is driven by the input element of the clutch to be calibrated,
e) analysing the detected speed of rotation and storing a value corresponding to the rapid fill time as a calibration value, insofar as the analysis fulfils predetermined criteria, and changing the rapid fill time and repeating steps c) to e), insofar as the analysis does not fulfil the predetermined criteria.

10. A method according to claim 9, **characterized in that** the analysis step includes the following steps:
determining a change in the detected speed of rotation and comparing the change with a stored reference value.

## Revendications

1. Procédé de calibrage d'un embrayage d'une boîte de vitesses, la boîte de vitesses étant munie d'un arbre d'entrée relié à un moteur, d'un arbre de sortie et de plusieurs embrayages, qui comportent chacun un élément d'entrée, vers lequel sont transmis des couples moteur, et un élément de sortie, comprenant les étapes suivantes :
maintien d'une vitesse de moteur sensiblement constante,
application d'un signal de pression hydraulique d'essai sur l'embrayage à calibrer ou sur l'un des embrayages montés en amont ou en aval de l'embrayage à calibrer,
enregistrement de la vitesse de rotation d'un composant interne de la boîte de vitesses, qui n'est ni l'arbre d'entrée ni l'arbre de sortie,
analyse de la vitesse de rotation enregistrée,
mise en mémoire d'une valeur correspondant au signal de pression d'essai appliqué en tant que valeur de calibrage, pour autant que l'analyse des critères prédéfinis a été satisfaisante ; et
modification du signal de pression d'essai et répétition des étapes b) à f), pour autant que l'analyse des critères prédéfinis n'a pas été satisfaisante.

2. Procédé selon la revendication 1, **caractérisé en ce que** la boîte de vitesses est maintenue dans un état dans lequel aucun couple moteur sensible n'est transmis par le moteur vers l'arbre de sortie.

3. Procédé selon la revendication 1 ou 2, **caractérisé par** les étapes suivantes :
a) application d'une pression d'essai sur l'embrayage à calibrer,
b) un deuxième embrayage est amené en position complètement embrayée, de telle sorte que toutes les pièces de l'embrayage à calibrer tournent,
c) le deuxième embrayage est amené en position complètement débrayée,
enregistrement de la vitesse de rotation d'un composant interne de la boîte de vitesses, qui est actionné par l'élément de sortie de l'embrayage à calibrer,
analyse de la vitesse de rotation enregistrée,
mise en mémoire d'une valeur correspondant à la pression d'essai appliquée en tant que valeur de calibrage, pour autant que l'analyse des critères prédéfinis a été satisfaisante ; et
modification de la pression d'essai et répétition des étapes b) à g), pour autant que l'analyse des critères prédéfinis n'a pas été satisfaisante.

4. Procédé selon la revendication 1 ou 2, **caractérisé par** les étapes suivantes :
d) au moins un deuxième embrayage est amené en position complètement embrayée, afin d'empêcher la rotation de l'élément de sortie de l'embrayage à calibrer,
e) application d'une pression d'essai sur l'embrayage à calibrer,
f) le deuxième embrayage est amené en position complètement débrayée,
enregistrement de la vitesse de rotation d'un composant de la boîte de vitesses, qui est actionné par l'élément de sortie de l'embrayage à calibrer,
analyse de la vitesse de rotation enregistrée, et
mise en mémoire d'une valeur correspondant à la pression d'essai appliquée en tant que valeur de calibrage, pour autant que l'analyse des critères prédéfinis a été satisfaisante, et
modification de la pression d'essai et répétition des étapes b) à g), pour autant que l'analyse des critères prédéfinis n'a pas été satisfaisante.

5. Procédé selon la revendication 3 ou 4, **caractérisé en ce que** l'étape d'analyse comporte les étapes suivantes :
- calcul de l'intervalle de temps nécessaire pour abaisser ou accroître jusqu'à une valeur déterminée la vitesse de rotation enregistrée, et
- comparaison entre l'intervalle de temps calculé et un intervalle de temps de référence entré en mémoire.

6. Procédé selon la revendication 4 ou 5, **caractérisé en ce qu'**entre les étapes b) et c) de la revendication 4 sont insérées les étapes suivantes :
- enregistrement de la vitesse de rotation d'un composant de la boîte de vitesses, qui est actionné par l'élément de sortie de l'embrayage à calibrer,
- suppression des étapes ultérieures si, pendant un intervalle de temps déterminé, la vitesse de rotation enregistrée est inférieure à une valeur définie.

7. Procédé selon une des revendications 1 à 6, **caractérisé par** les étapes suivantes :
a) application d'une pression d'arrêt sur un deuxième embrayage, qui est relié à l'élément de sortie de l'embrayage à calibrer, la pression d'arrêt correspondant à une pression à laquelle le deuxième embrayage commence à transmettre des couples moteur,
b) application d'une pression totale sur un troisième embrayage, qui est relié à l'élément de sortie du deuxième embrayage, afin d'empêcher la rotation de l'élément de sortie du deuxième embrayage,
c) application de la pression totale sur l'embrayage à calibrer pendant un intervalle de temps de remplissage rapide et, à la suite de cela, application de la pression d'un réservoir de stockage sur l'embrayage à calibrer,
d) enregistrement de la vitesse de rotation d'un composant de la boîte de vitesses, qui est actionné par l'élément de sortie de l'embrayage à calibrer,
e) analyse de la vitesse de rotation enregistrée et mise en mémoire d'une valeur correspondant à l'intervalle de temps de remplissage rapide en tant que valeur de calibrage, pour autant que l'analyse réponde aux critères définis précédemment, et modification de l'intervalle de temps de remplissage rapide et répétition des étapes c) à e) pour autant que l'analyse ne réponde pas aux critères définis précédemment.

8. Procédé selon la revendication 7, **caractérisé en ce que**, au cours de l'étape d'analyse, la vitesse de rotation enregistrée est comparée à une vitesse de référence stockée en mémoire.

9. Procédé selon une des revendications 1 à 6, **caractérisé par** les étapes suivantes :
a) application d'une pression d'arrêt sur un deuxième embrayage, qui est relié à l'élément d'entrée de l'embrayage à calibrer, la pression d'arrêt correspondant à une pression à laquelle le deuxième embrayage commence à transmettre des couples moteur,
b) application d'une pression totale sur un troisième embrayage, qui est relié à l'élément de sortie du deuxième embrayage, afin d'empêcher la rotation dudit élément d'entrée,
c) application de la pression totale sur l'embrayage à calibrer pendant un intervalle de temps de remplissage rapide et, à la suite de cela, application de la pression d'un réservoir de stockage sur l'embrayage à calibrer,
d) enregistrement de la vitesse de rotation d'un composant de la boîte de vitesses, qui est actionné par l'élément d'entrée de l'embrayage à calibrer,
e) analyse de la vitesse de rotation enregistrée et mise en mémoire d'une valeur correspondant à l'intervalle de temps de remplissage rapide en tant que valeur de calibrage, pour autant que l'analyse réponde aux critères définis précédemment, et modification de l'intervalle de temps de remplissage rapide et répétition des étapes c) à e) pour autant que l'analyse ne réponde pas aux critères définis précédemment.

10. Procédé selon la revendication 9, **caractérisé en ce que** l'étape d'analyse comporte l'étape suivante :
- détermination d'une variation dans la vitesse de rotation enregistrée et comparaison entre la variation et une valeur de référence mise en mémoire.
